**Europäisches Patentamt**

**European Patent Office**

**Office européen des brevets**

(19)

(11) Veröffentlichungsnummer: **0 053 246**
**B1**

(12)

# EUROPÄISCHE PATENTSCHRIFT

(45) Veröffentlichungstag der Patentschrift:
**01.02.84**

(21) Anmeldenummer: **81108201.5**

(22) Anmeldetag: **12.10.81**

(51) Int. Cl.³: **C 05 D 9/02**

(54) **Verfahren zur Herstellung von Mehrspurennährstoffdüngemitteln.**

(30) Priorität: **28.11.80 DE 3044903**

(43) Veröffentlichungstag der Anmeldung:
**09.06.82 Patentblatt 82/23**

(45) Bekanntmachung des Hinweises auf die Patenterteilung:
**01.02.84 Patentblatt 84/5**

(84) Benannte Vertragsstaaten:
**AT BE CH DE FR GB IT LI SE**

(56) Entgegenhaltungen:
**DE - A - 2 846 832**
**DE - C - 945 847**
**FR - A - 2 152 320**
**FR - A - 2 222 331**
**FR - A - 2 266 695**

(73) Patentinhaber: **BASF Aktiengesellschaft,**
**Carl-Bosch-Strasse 38, D-6700 Ludwigshafen (DE)**

(72) Erfinder: **Leutner, Bernd, Dr., Taunusstrasse 17,**
**D-6710 Frankenthal (DE)**
Erfinder: **Purucker, Bernhard, Dr., Kranichstrasse 14,**
**D-6700 Ludwigshafen (DE)**
Erfinder: **Rother, Eberhard, Dr., Leuschnerstrasse 40 A,**
**D-6700 Ludwigshafen (DE)**
Erfinder: **Juergens, Geerd Friedrich, Dr.,**
**Robert-Schumann-Strasse 27, D-6707 Schifferstadt (DE)**
Erfinder: **Wagner, Dieter, Klappengasse 27,**
**D-6707 Schifferstadt (DE)**

**0 053 246**

Verfahren zur Herstellung von Mehrspurennährstoffdüngemitteln

Vorliegende Erfindung betrifft ein Verfahren zur Herstellung von Mehrspurennährstoffdüngemitteln mit einem hohen Gehalt an Magnesium und Spurennährstoffelementen, wobei die komplexbildenden Spurenelemente Eisen, Mangan, Kupfer, Zink, Nickel und Cobalt vorwiegend in Form ihrer anionischen Chelatverbindungen mit einer oder mehreren N-Carboxyalkylaminosäuren vorliegen.

Eine normale pflanzliche Entwicklung erfordert neben den bekannten Hauptnährstoffen auch die Zufuhr von Magnesium und Spurennährstoffelementen, wie Eisen, Mangan, Kupfer, Zink, Nickel, Cobalt, Bor und Molybdän. Die Spurenelemente werden zum Aufbau von Enzymsystemen der pflanzlichen Zellen benötigt. Unterbleibt die Zufuhr auch nur eines der genannten Spurenelemente oder ist diese zu gering, so treten Mangelerscheinungen auf. Sehr häufig ergeben sich bei Pflanzen solche Extremzustände in der Nährstoffversorgung durch eine zu geringe Verfügbarkeit der Spurenelemente, insbesondere der genannten Schwermetalle, im Boden. Bekannt ist z. B. die durch Eisenmangel hervorgerufene Chloroseerkrankung. Sie läßt sich beheben, indem der erkrankten Pflanze, sei es über das Blatt oder über die Wurzel, die fehlenden Eisenionen in Form von löslichen Eisenverbindungen zugeführt werden. Als besonders wirksam haben sich hierbei die Eisenchelatkomplexe der N-Carboxyalkylaminosäuren, z. B. der Ethylendiamintetraessigsäure, erwiesen. Auch die Chelatkomplexe mit anderen Spurennährstoffelementen weisen eine bessere Wirkung auf als die einfachen anorganischen Salze (vgl. S. Chabarek und A. Martell, Organic Sequesterings Agents, John Wiley and Sons, Inc., 1959, S. 455 – 469; DE-C-945 847).

Aus diesen Gründen werden zur Behebung der durch Spurennährstoffelementmangel hervorgerufenen Pflanzenschäden oder vorsorglich zur Verhinderung solcher Mangelerkrankungen und damit zur Ertragssteigerung in der Landwirtschaft derartige Metallchelate eingesetzt (vgl. A. Wallace, Farm Chemicals 133, 34 [1970]; A. Finck, Dünger und Düngung, Verlag Chemie, Weinheim 1979, S. 93 – 137).

Solche Spurennährstoffelementdünger werden in fester, pastöser und auch in bereits gelöster Form vom Handel angeboten. Als feste Spurennährstoffelementdünger werden überwiegend Dünger aus den Einzelkomponenten eingesetzt; in praktisch allen Fällen handelt es sich dabei um die Natriumsalze der anionischen Spurenelementchelate, oft in Form von Gemischen mit Neutralsalzen, z. B. Natriumsulfat. Auch die Verwendbarkeit von Kalium- und Ammoniumsalzen der anionischen Chelatkomplexe der Spurennährstoffelemente ist beschrieben.

Mischungen, die neben mehreren Spurenelementen als weitere Nährstoffkomponente auch Magnesium enthalten, werden in jüngerer Zeit in zunehmendem Maße vor allem als Blattdünger zur verbesserten Versorgung von Kulturen auf Standorten mit hohem Ertragspotential eingesetzt.

Die Herstellung solcher festen Mehrspurennährstoff-Düngemittel mit Magnesium erfolgt entweder durch Vermischen der obengenannten, in getrennten Arbeitsgängen hergestellten Chelatkomplexe der Einzelkomponenten unter Zusatz wasserlöslicher Salze des Magnesiums, z. B. Magnesiumsulfat, und weiterer nichtchelatisierter bzw. nicht chelatisierbarer Spurennährstoffelemente, wie Bor und Molybdän, oder durch einfaches Vermischen von wasserlöslichen Salzen des Magnesiums und der Spurennährstoffelemente mit den Natrium- oder Kaliumsalzen der komplexbildenden N-Carboxyalkylaminosäuren (DE-C-2 313 921 und DE-B-2 846 832).

Die erhaltenen Feststoffmischungen weisen prinzipiell folgende Nachteile auf:

— Die Gefahr von Entmischungen ist bei Mischungen von Salzen unterschiedlicher Körnungen und Dichten stets gegeben.

— Bei längerer Lagerung, z. B. bei erhöhter Temperatur, und bei nicht vorschriftsmäßiger Lagerung können Verbackungserscheinungen auftreten, deren Ursache vor allem in der durch Feuchtigkeit beschleunigten Feststoffreaktion zwischen Komplexbildnern und den meist in hydratisierter Form eingesetzten, technischen Spurennährstoffelementsalzen unter Komplexbildung und Freisetzung von Kristallwasser und nachfolgender Rekristallisation von Spurennährstoffelementchelatkomplex-Hydraten zu sehen ist.

— Weiterhin können die in den üblicherweise eingesetzten technischen Salzen zumeist in geringer Menge enthaltenen schwerlöslichen Verunreinigungen besonders bei der Blattspritzung zu anwendungstechnischen Schwierigkeiten, z. B. durch Verstopfen der Verdüsungseinrichtungen, führen.

In allen genannten Fällen, z. B. auch bei der Herstellung von pastenförmigen Produkten, wird neben wasserlöslichen Spurennährstoffelementsalzen auch Magnesium in Form von wasserlöslichen Salzen eingesetzt. Dadurch ergibt sich wegen der anteilmäßig hohen Gehalte der Anionen bei den zu bewertenden Gesamt-Spurennährstoffgehalten der Mischungen eine starke Begrenzung nach oben.

Bisher enthalten daher handelsübliche feste Mehrspurennährstoff-Düngemittel mit Magnesium 4 – 6 Gewichtsprozent der komplexbildenden Spurennährstoffelemente Fe, Mn, Cu, Zn und gegebenenfalls Co bzw. 8 – 12 Gewichtsprozent Gesamtgehalt an allen Spurennährstoffelementen einschließlich MgO und der nicht komplexierbaren Spurennährstoffelemente Bor und Molybdän.

Der vorliegenden Erfindung lag die Aufgabe zugrunde, ein einfaches Verfahren zur Herstellung von

2

Mehrspurennährstoff-Düngemitteln mit einem Gehalt an Magnesium und an Chelatkomplexen der komplexbildenden Spurenelemente aus der Gruppe Me = Fe, Mn, Zn, Cu, Co, Ni bereitzustellen, bei dem die erhaltenen Mehrspurennährstoff-Düngemittel

— gegenüber den bisher bekannten Mehrspurennährstoffdüngemitteln einen deutlich erhöhten Nährstoffgehalt aufweisen und die im übrigen die an sie gestellten Forderungen bezüglich Wirksamkeit und Pflanzenverträglichkeit voll erfüllen,
— eine gute Lagerfähigkeit aufweisen,
— in Wasser praktisch rückstandsfrei und schnell löslich sind und
— stabil gegen Entmischung sind.

Erfindungsgemäß läßt sich diese Aufgabe dadurch lösen, daß man die N-Carboxyalkylaminosäuren in Gegenwart von Wasser mit den Spurennährstoffelementen oder Spurennährstoffelementverbindungen in einem Molverhältnis von N-Carboxyalkylaminosäuren zu Spurennährstoffelementen bzw. -verbindungen von mindestens 0,8 : 1, wobei mindestens 20 Gew.-% dieser Verbindungen Oxide, Hydroxide und/oder Carbonate sind, umsetzt und gleichzeitig oder anschließend durch Zugabe von Magnesiumoxiden, -hydroxiden, oder -carbonaten, und/oder Alkalioxiden, -hydroxiden und/oder -carbonaten und/oder Ammoniak als alkalischen Verbindungen den pH der Lösung auf Werte von 3,5 bis 6 einstellt, mit der Maßgabe, daß mindestens 50 Äquivalent-Prozente der insgesamt erforderlichen alkalischen Verbindungen Magnesiumverbindungen sind.

Bei der erfindungsgemäßen Umsetzung werden die N-Carboxyalkylaminosäuren mit den Spurennährstoffelementverbindungen in Gegenwart von Wasser umgesetzt. Die Wassermenge ist so zu bemessen, daß eine gut rührbare Suspension vorliegt, um eine rasche und gute Umsetzung zu gewährleisten. Zweckmäßig sollte soviel Wasser zugegen sein, daß die Reaktionsprodukte nach beendeter Umsetzung in gelöster Form vorliegen. Als Spurennährstoffelementverbindungen wählt man einen Anteil von mindestens 20 Gew.-% der insgesamt erforderlichen Menge in Form der im allgemeinen schwer wasserlöslichen Carbonate, insbesondere aber der Oxide und Hydroxide, und setzt sie in einem Molverhältnis von N-Carboxyalkylaminosäure zu Spurennährstoffelement von mindestens 0,8 : 1 um, d. h., daß nach beendeter Umsetzung mindestens etwa 80% der eingesetzten Spurennährstoffelemente in komplexierter Form vorliegen. Ein Molverhältnis von 1 : 1 wird in der Regel nicht überschritten.

Der restliche Anteil der Spurennährstoffelement-Verbindungen kann aus den Nitraten, Chloriden insbesondere aber den Sulfaten der jeweiligen Elemente bestehen. Es ist auch möglich, anstelle der Verbindungen auch die Elemente selbst einzusetzen, sofern diese unedler als Wasserstoff sind.

Die N-Carboxyalkylaminosäuren können auch substituiert sein. Bevorzugte Säuren sind die Nitrilotriessigsäuren ($H_3NTA$), Hydroxyethylethylendiamintriessigsäure ($H_3EDTA$), Cyclohexan-1,2-diamintetraessigsäure ($H_4CDTA$), insbesondere aber Diethylentriaminpentaessigsäure ($H_5DPTA$), und vor allem Ethylendiamintetraessigsäure ($H_4EDTA$).

Gemäß einem weiteren Merkmal der Erfindung wird der pH-Wert der Reaktionslösung auf einen Wert von 3,5 bis 6 angehoben, indem man gleichzeitig oder nach beendeter Umsetzung der Säuren mit den Spurennährstoffelementverbindungen der Reaktionslösung bzw. -suspension Magnesiumoxide, -hydroxide oder -carbonate und/oder Alkalioxide, -hydroxide und/oder -carbonate, insbesondere diejenigen des Natriums und/oder Kaliums, sowie und/oder Ammoniak zusetzt. Hier gilt jedoch die Einschränkung, daß mindestens 50 Äquivalent-Prozente der erforderlichen Alkalien in Form der genannten Magnesium-Verbindungen eingesetzt werden sollen. Welcher genaue pH-Wert nach beendeter Reaktion in der Lösung bzw. Suspension vorliegen soll, hängt von der jeweils gewünschten Nährstoffzusammensetzung des herzustellenden, Magnesium enthaltenden Mehrspurennährstoffdüngers ab. Es ist nicht erforderlich, die pH-Wert-Einstellung nach beendeter Reaktion durchzuführen, sondern diese kann auch während der Reaktion selbst erfolgen. Selbstverständlich ist es auch möglich, anstelle der reinen N-Carboxyalkylaminosäuren diese zumindest teilweise in Form ihrer entsprechenden Alkali-, Ammonium- oder Magnesium-Salze einzusetzen, so daß die Neutralisation teilweise vorverlegt wird. Eine solche Teil-Vorverlegung der Neutralisation kann u. U. wegen der veränderten Löslichkeitsverhältnisse — die Salze der N-Carboxyalkylaminosäuren sind in Wasser löslicher als die entsprechenden Säuren — günstig sein. Die Umsetzung führt man vorteilhaft bei erhöhten Temperaturen durch, indem man die Mischung beispielsweise 1 bis 5 Stunden lang unter Rückfluß am Sieden hält. Nach beendeter Reaktion erhält man je nach eingesetzter Wassermenge eine Lösung oder Suspension der Reaktionskomponenten, die als flüssiges Mehrspurennährstoff-Düngemittel eingesetzt werden kann. Selbstverständlich können diesen Suspensionen bzw. Lösungen andere düngewirksame Komponenten, wie N, z. B. Harnstoff, B, Mo oder auch Pflanzenschutzmittel, Stabilisatoren gegen Pilzbefall, Farbstoffe, Netzmittel u. a., zugesetzt werden.

Falls gewünscht, können die erhaltenen Lösungen oder Suspensionen auch durch Entzug von Wasser verfestigt werden. Dieser Wasserentzug kann vorteilhaft durch Sprühtrocknung oder insbesondere zur Erzeugung gut rieselfähiger, nicht staubender Produkte durch die Sprühwirbelschicht-Trocknung bewerkstelligt werden. Zur Erzielung eines Festproduktes, das besonders schnell und leicht löslich ist, ist der Wasserentzug bei einem Restwassergehalt von 4 bis 10 Gew.-% (bestimmt nach Aufhäuser) abzubrechen.

Bei den in den folgenden Beispielen genannten Prozentangaben handelt es sich um Gewichtsprozente.

## Beispiel 1

A) In einem Reaktionsgefäß mit Rührer und Rückflußkühler werden in 14,72 kg Waser, 160 g Magnesiumoxid (97% MgO), 828 g Goethit (FeO(OH) mit 58% Fe), 340 g Braunstein (93% $MnO_2$) und 5703 g Ethylendiamintetraessigsäure (im folgenden als $H_4EDTA$ bezeichnet) vorgelegt und 3 Stunden lang unter Rückfluß gekocht.

Anschließend werden weitere 252,4 g Magnesiumoxid (97% MgO), 119,6 g basisches Kupfercarbonat ($CuCO_3 \cdot Cu(OH)_2$ mit 57,5% Cu), 503 g Zinkoxid (ZnO), 7,4 g Ammoniummolybdat ($(NH_4)_6Mo_7O_{24} \cdot 4 H_2O$), 6,3 g Kobalthydroxid ($Co(OH)_2$ mit 63,4% Co) und 389,6 g Borsäure ($H_3BO_3$) eingetragen.

Der Ansatz wird noch eine weitere Stunde lang unter Rückfluß gekocht. Der pH-Wert der heißen Lösung wird mit 573 g konzentriertem Ammoniakwasser (25% $NH_3$) von 3,5 auf 5,3 eingestellt. Die Lösung (23,6 kg) wird heiß filtriert und durch Sprühtrocknung zu 8,2 kg eines braunen Feststoffes mit folgenden Gehalten aufgearbeitet:

4,9% MgO; 5,9% Fe; 2,4% Mn; 4,9% Zn; 0,8% Cu; 0,05% Mo;
0,8% B; 0,05% Co; 8,0% $H_2O$; 69,6% $H_4EDTA$.

B) Zur Herstellung einer lagerstabilen Lösung wird die gemäß A als Zwischenprodukt erhaltene Lösung (23,6 kg) durch Zusatz von 3,1 kg Wasser auf einen Feststoffgehalt von 30,7% (bezogen auf das Festprodukt) verdünnt.

Man erhält hierbei einen flüssigen Mehrspurenelementdünger mit folgenden Gehalten:

1,5% MgO; 1,8% Fe; 0,7% Mn; 1,5% Zn; 0,25% Cu; 0,015% Mo; 0,25% B; 0,015% Co.

## Beispiel 2

In einem dampfbeheizten 300-l-Rührkessel werden in 152 kg Wasser 52,18 kg $H_4EDTA$ und 14,0 kg 87prozentiges Tetranatriumethylendiamintetraacetat ($Na_4EDTA$) suspendiert und mit folgenden Einsatzstoffen versetzt:

10,0 kg Magnesiumhydroxid ($Mg(OH)_2$), 25,4 kg Eisensulfat ($FeSO_4 \cdot 7 H_2O$), 3,74 kg 93prozentiger Braunstein ($MnO_2$), 2,75 kg Kupfersulfat ($CuSO_4 \cdot 5 H_2O$), 5,48 kg Zinkoxid (ZnO), 4,0 kg Borsäure ($H_3BO_3$), 0,08 kg Ammoniummolybdat ($(NH_4)_6Mo_7O_{24} \cdot 4 H_2O$), 0,20 kg Kobaltsulfat ($CoSO_4 \cdot 7 H_2O$).

Die Suspension wird zum Sieden erhitzt und eine Stunde lang unter Rückfluß gekocht. Nach Zusatz von 14,3 kg 25prozentiger Ammoniaklösung zur Einstellung eines pH-Wertes von 4,8 wird heiß filtriert. Die erhaltene Lösung wird durch Sprühwirbeltrocknung zu 100 kg eines olivgrünen grießförmigen Feststoffes mit folgenden Gehalten aufgearbeitet:

4,4% MgO; 5,1% Fe; 2,2% Mn; 0,7% Cu; 4,4% Zn; 0,7% B; 0,04% Mo;
0,04% Co; 9,2% $H_2O$; 2,9% $NH_4$-Stickstoff.

## Beispiel 3

In einem Reaktionsgefäß mit Rührer und Rückflußkühler werden 5,34 kg Wasser vorgelegt und folgende Einsatzstoffe nacheinander oder als Mischung eingetragen:

1463 g $H_4EDTA$, 1194 g 87proz. $Na_4EDTA$, 236 g 97prozentiges Magnesiumoxid (MgO), 195 g 93prozentiger Braunstein ($MnO_2$), 28,4 g Zinkoxid (ZnO), 914 g Eisensulfat ($FeSO_4 \cdot 7 H_2O$), 131 g Borsäure ($H_3BO_3$), 42 g Ammoniummolybdat ($(NH_4)_6Mo_7O_{24} \cdot 4 H_2O$), 10,8 g Kobaltsulfat ($CoSO_4 \cdot 7 H_2O$).

Der Ansatz wird zum Sieden erhitzt und 1 Stunde lang unter Rückfluß gekocht. Die entstandene grüne Lösung (pH = 5) wird heiß filtriert und durch Sprühwirbeltrocknung zu 4200 g eines grünen grießförmigen Produktes mit folgenden Gehalten aufgearbeitet:

5,5% MgO; 4,4% Fe; 2,7% Mn; 2,7% Cu; 0,54% Zn;
0,54% Mo; 0,54% B; 0,05% Co; 8,0% $H_2O$.

Zur Bestimmung der Löslichkeit werden unterschiedliche Mengen des Produktes in Wasser von 25°C unter Rühren mittels eines Gitter-Rührers nach Hoesch (350 UpM) gelöst und nach 3 Minuten Rührzeit die ungelösten Rückstände ermittelt:

| Einwaage | 2 g/l | 10 g/l | 80 g/l | 160 g/l | 350 g/l |
|---|---|---|---|---|---|
| ungelöster Rückstand in % vor der Einwaage | 0,005 | 0,01 | 0,03 | 0,03 | 0,03 |

Aus der Tabelle ist zu ersehen, daß das Produkt praktisch rückstandsfrei in Wasser löslich ist.

## Beispiel 4

In 144 kg Wasser werden folgende Einsatzstoffe suspendiert und zum Sieden erhitzt:

57,0 kg $H_4$EDTA, 9,82 kg 97prozentiges Magnesiumoxid (MgO), 6,49 kg 93prozentiger Braunstein ($MnO_2$), 2,38 kg Zinkoxid (ZnO), 18,97 kg Eisensulfat ($FeSO_4 \cdot 7\ H_2O$), 7,47 kg Kupfersulfat ($CuSO_4 \cdot 5\ H_2O$), 3,26 kg Borsäure ($H_3BO_3$), 175 g Ammoniummolybdat (($NH_4)_6Mo_7O_{24} \cdot 4\ H_2O$), 272 g Kobaltsulfat ($CoSO_4 \cdot 7\ H_2O$).

Nach einstündigem Kochen unter Rückfluß wird heiß (T=80°C) filtriert, pH der Lösung 4,5, und durch Sprühtrocknung zu 100 kg eines grünen Pulvers aufgearbeitet. Das Produkt wird mit 5,26 kg pulverförmigem Natriumbicarbonat homogen vermischt, die Mischung weist folgende Gehalte auf:

9% MgO; 3,6% Fe; 3,6% Mn; 1,8% Cu; 1,8% Zn; 0,54% B; 0,09% Mo; 0,05% Co.

## Beispiel 5

A) In 1720 g Wasser werden 370,8 g $H_4$EDTA und 268,4 g Diethylentriaminpentaessigsäure ($H_5$DTPA) suspendiert und mit folgenden Einsatzstoffen versetzt:

98,3 g 97proz. Magnesiumoxid, 64,9 g 93proz. Mangandioxid, 23,8 g Zinkoxid, 189,7 g Eisensulfat ($FeSO_4 \cdot 7\ H_2O$), 74,7 g Kupfersulfat ($CuSO_4 \cdot 5\ H_2O$), 32,8 g Borsäure ($H_3BO_3$), 1,75 g Ammoniummolybdat ($(NH_4)_6Mo_7O_{24} \cdot 4\ H_2O$), 2,72 g Kobaltsulfat ($CoSO_4 \cdot 7\ H_2O$).

Der Ansatz wird zum Sieden erhitzt und 0,5 Stunden lang unter Rückfluß gekocht. Die klare grüne Lösung (pH 3,5) wird heiß filtriert und zur Trockne eingeengt.
Nach Trocknung bei 60°C im Wasserstrahlvakuum werden 1130 g eines grünen Feststoffes erhalten.

Gehalte:
8,4% MgO; 3,4% Fe; 3,4% Mn; 2,7% Cu; 1,7% Zn; 0,5% B; 0,08% Mo; 0,05% Co.

B) Zur Herstellung einer 30prozentigen, lagerstabilen Lösung werden der bei Beispiel A als Zwischenprodukt hergestellten grünen Lösung (39,7% Feststoffgehalt) 919 g Wasser zugesetzt.

Gehalte:
2,5% MgO; 1,0% Fe; 1,0% Mn; 0,5% Cu; 0,5% Zn; 0,15% B; 0,024% Mo; 0,015% Co.

## Beispiel 6

A) 430,7 g Cyclohexan-trans-1,2-diamintetraessigsäure-Monohydrat ($H_4$CDTA $\cdot\ H_2O$), 70,7 g $H_4$EDTA und 130,7 g 87proz. $Na_4$EDTA werden in 1560 g Wasser suspendiert und mit folgenden Einsatzstoffen versetzt:

91,0 g 97proz. Magnesiumoxid, 18,7 g 93proz. Mangandioxid, 13,7 g Zinkoxid, 330 g Eisensulfat ($FeSO_4 \cdot 7\ H_2O$), 43,2 g Kupfersulfat ($CuSO_4 \cdot 5\ H_2O$), 62,9 g Borsäure, 0,18 g Ammoniummolybdat (($NH_4)_6Mo_7O_{24} \cdot 4\ H_2O$).

Der Ansatz wird zum Sieden erhitzt und 30 Min. lang unter Rückfluß gekocht. Die entstandene klare Lösung (2750 g, pH=4,6) wird heiß filtriert und zur Trockne eingeengt. Nach Trocknung im Wasserstrahlvakuum bei 60°C werden 1100 g eines grünen Feststoffes erhalten.

Gehalte:
8,0% MgO; 6,0% Fe; 1,0% Mn; 1,0% Cu; 1,0% Zn; 1,0% B; 0,01% Mo.

B) Die bei Beispiel 4 anfallende Lösung (2750 g, 40% Feststoff) ist auch bei Raumtemperatur lagerstabil.

Gehalte:
3,2% MgO; 2,4% Fe; 0,4% Mn; 0,4% Cu; 0,4% Zn; 0,4% B; 0,004% Mo.

Beispiel 7

In einem dampfbeheizten 300-l-Rührkessel werden in 124 kg Wasser 41,62 kg H$_4$EDTA und 28,43 kg 40proz. Na$_4$EDTA-Lösung suspendiert und mit folgenden Einsatzstoffen versetzt:

9,07 kg 97proz. Magnesiumoxid, 33 kg Eisensulfat (FeSO$_4$ · 7 H$_2$O), 1,87 kg 93proz. Mangandioxid, 137 kg Zinkoxid, 6,29 kg Borsäure, 18,4 g Ammoniummolybdat ((NH$_4$)$_6$Mo$_7$O$_{24}$ · 4 H$_2$O).

Die Suspension wird zum Sieden erhitzt und 1 Stunde lang bei 102°C unter Rückfluß gekocht. Nach Zusatz von 4,32 kg Kupfersulfat (CuSO$_4$ · 5 H$_2$O) wird die gebildete Lösung, die einen pH-Wert von 4,3 aufweist, heiß (T=80°C) filtriert und durch Sprühwirbeltrocknung zu 100 kg eines grünen grießförmigen Produktes aufgearbeitet.

Gehalte:
8,8% MgO; 6,6% Fe; 1,1% Mn; 1,1% Cu; 1,1% Zn; 1,1% B; 0,01% Mo; 8,4% H$_2$O.

Beispiel 8

292,2 g H$_4$EDTA werden in 610 g Wasser suspendiert. Unter Rühren werden 27,2 g 95prozentiger Braunstein (MnO$_2$) und 21,6 g 98prozentiges Eisenpulver eingetragen. Der Ansatz wird zum Sieden erhitzt und 1 Stunde lang unter Rückfluß gekocht. Die entstandene hellgelbe Suspension (pH-Wert 2,2 bei 90°C) wird mit 26,7 g Zinkoxid und 23,1 g 92prozentigem Magnesiumoxid versetzt und eine weitere Stunde lang unter Rückfluß gekocht. Die bräunlich-gelbe Lösung wird heiß filtriert (pH-Wert 3,6 bei 36°C) und zur Trockne eingeengt. Nach Trocknung bei 60°C im Wasserstrahlvakuum werden 415 g eines bräunlich-gelben Feststoffes mit folgenden Gehalten erhalten:

5,1% MgO; 5,1% Fe; 3,9% Mn; 5,1% Zn.

**Patentansprüche**

1. Verfahren zur Herstellung von Mehrspurennährstoff-Düngemitteln, die zusätzlich als weitere Nährstoff-Komponente Magnesium enthalten und bei denen die komplexbildenden Spurennährstoffelemente in Form von anionischen Chelatverbindungen mit einer oder mehreren N-Carboxyalkylaminosäuren vorliegen, dadurch gekennzeichnet, daß man die N-Carboxyalkylaminosäuren in Gegenwart von Wasser mit den Spurennährstoffelementen oder Spurennährstoffelementverbindungen in einem Molverhältnis von N-Carboxyalkylaminosäuren zu Spurennährstoffelementen bzw. -verbindungen von mindestens 0,8 : 1, wobei mindestens 20 Gew.-% dieser Verbindungen Oxide, Hydroxide und/oder Carbonate sind, umsetzt und gleichzeitig oder anschließend durch Zugabe von Magnesium-oxiden, -hydroxiden oder -carbonaten, und/oder Alkali-oxiden, -hydroxiden und/oder -carbonaten und/oder Ammoniak als alkalischen Verbindungen den pH der Lösung auf Werte von 3,5 bis 6 einstellt, mit der Maßgabe, daß mindestens 50 Äquivalent-Prozente der insgesamt erforderlichen alkalischen Verbindungen Magnesiumverbindungen sind.

2. Verfahren nach Anspruch 1, dadurch gekennzeichnet, daß man die nach der Umsetzung erhaltene Lösung durch Entzug von Wasser verfestigt.

3. Verfahren nach Anspruch 2, dadurch gekennzeichnet, daß man den Entzug von Wasser durch Sprüh- oder Sprühwirbeltrocknung bewirkt.

4. Verfahren nach Ansprüchen 2 bis 3, dadurch gekennzeichnet, daß man den Entzug von Wasser bis auf einen Restgehalt von 4 bis 10 Gew.-% durchführt.

**Claims**

1. A process for the preparation of a multi-trace nutrient fertilizer which contains magnesium as a further nutrient and in which the complex-forming trace elements are present in the form of anionic chelates with one or more N-carboxyalkylaminoacids, wherein the N-carboxyalkylaminoacids are reacted, in the presence of water, with the trace elements or trace element compounds in a molar ratio of N-carboxyalkylaminoacids to trace elements or trace element compounds of not less than 0.8 : 1, at least 20% by weight of the trace element compounds being oxides, hydroxides and/or carbonates, and at the same time, or subsequently, the pH of the solution is brought to 3.5−6 by adding magnesium oxides, hydroxides or carbonates and/or alkali metal oxides, hydroxides and/or carbonates and/or ammonia as alkaline compounds, with the proviso that at least 50 equivalent percent of the total amount of alkaline compounds required are magnesium compounds.

2. A process as claimed in claim 1, wherein the solution obtained after the reaction is solidified by abstracting water.

3. A process as claimed in claim 2, wherein the water is abstracted by spray-drying or fluidized bed spray drying.

4. A process as claimed in claim 2 or 3, wherein the abstraction of water is taken to a residual content of 4 − 10% by weight.

**Revendications**

1. Procédé pour la préparation d'engrais à multiples oligo-éléments nutritifs, qui contiennent en plus du magnésium en tant qu'autre constituant nutritif et dans lesquels les oligo-éléments complexants se présentent sous forme de composés anioniques de chélation avec un ou plusieurs acides N-carboxyalcoylaminés, caractérisé en ce qu'on met à réagir les acides N-carboxyalcoylaminés, en présence d'eau, avec les oligo-éléments nutritifs ou des composés d'oligo-éléments nutritifs, dans un rapport molaire d'au moins 0,8 : 1 des acides N-carboxyalcoylaminés aux oligo-éléments nutritifs ou composés de ceux-ci, 20% en poids au moins de ces composés étant des oxydes, hydroxydes et/ou carbonates, et simultanément ou immédiatement après, on règle le pH de la solution à des valeurs de 3,5 à 6 par addition d'oxydes, hydroxydes ou carbonates de magnésium et/ou d'oxydes, hydroxydes et/ou carbonates de métaux alcalins et/ou d'ammoniac en tant que composés alcalins, avec cette condition qu'au moins 50% en équivalents des composés alcalins nécessaires au total soient des composés du magnésium.

2. Procédé selon la revendication 1, caractérisé en ce qu'à la suite de la réaction, on rend solide la solution obtenue par élimination d'eau.

3. Procédé selon la revendication 2, caractérisé en ce qu'on effectue l'élimination d'eau par séchage par pulvérisation ou en lit fluidisé.

4. Procédé selon la revendication 2 ou 3, caractérisé en ce qu'on effectue l'élimination d'eau jusqu'à une teneur résiduelle de 4 à 10% en poids.